(19)

Europäisches
Patentamt

European
Patent Office

Office européen
des brevets

(11) **EP 4 675 901 A1**

(12) **EUROPEAN PATENT APPLICATION**

(43) Date of publication:
**07.01.2026 Bulletin 2026/02**

(21) Application number: **25186824.6**

(22) Date of filing: **02.07.2025**

(51) International Patent Classification (IPC):
***H02K 49/10*** *(2006.01)*

(52) Cooperative Patent Classification (CPC):
**H02K 49/102;** H02K 2213/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.07.2024 JP 2024107348**

(71) Applicant: **Sumitomo Heavy Industries, Ltd.
Tokyo 141-6025 (JP)**

(72) Inventors:
• **YAMAMOTO, Taizo
  Kanagawa, 237-8555, (JP)**
• **MURAO, Shunta
  Kanagawa, 237-8555, (JP)**

(74) Representative: **Louis Pöhlau Lohrentz
Patentanwälte
Postfach 30 55
90014 Nürnberg (DE)**

(54) **SERIES OF MAGNETIC MODULATION GEARS AND MAGNETIC MODULATION GEAR**

(57) Magnetic modulation gears (1) having different reduction ratios (R) are suitably lined up. A series of magnetic modulation gears (1) includes a first magnetic modulation gear (1A) and a second magnetic modulation gear (1B). Each of the first magnetic modulation gear (1A) and the second magnetic modulation gear (1B) includes an inner magnetic pole body (41a), an intermediate magnetic pole body (54), and an outer magnetic pole body (12); and the first magnetic modulation gear (1A) and the second magnetic modulation gear (1B) are different from each other in terms of any two of the number (Ni) of inner pole pairs that is the number of pole pairs of the inner magnetic pole body (41a), the number (Np) of magnetic pole pieces that is the number of magnetic poles of the intermediate magnetic pole body (54), and the number (No) of outer pole pairs that is the number of pole pairs of the outer magnetic pole body (12). At least one of the inner magnetic pole body (41a), the intermediate magnetic pole body (54), and the outer magnetic pole body (12) includes a component common to the first magnetic modulation gear (1A) and the second magnetic modulation gear (1B).

FIG. 3A

FIG. 3B

FIG. 3C

FIG. 3D

EP 4 675 901 A1

## Description

BACKGROUND OF THE INVENTION

Field of the Invention

The present invention relates to a series of magnetic modulation gears and a magnetic modulation gear.

Description of Related Art

In the related art, a magnetic modulation gear is known in which a plurality of magnetic pole pieces are arranged between two magnets disposed on an inner periphery and an outer periphery, and a magnetic flux distribution between the magnets disposed on the inner periphery and the outer periphery is modulated. In the magnetic modulation gear, torque is transmitted between the magnet disposed on the inner periphery and the magnetic pole pieces, and deceleration or acceleration rotation is transmitted (for example, see Japanese Unexamined Patent Publication No. 2017-17984).

SUMMARY OF THE INVENTION

In a case where magnetic modulation gears having different reduction ratios are series-connected, it is desirable to adopt a suitable configuration in which as many components as possible can be shared.

An object of the present invention is to suitably line up magnetic modulation gears having different reduction ratios.

According to an aspect of the present invention, there is provided a series of magnetic modulation gears including a first magnetic modulation gear and a second magnetic modulation gear. Each of the first magnetic modulation gear and the second magnetic modulation gear includes an inner magnetic pole body, an intermediate magnetic pole body, and an outer magnetic pole body; the first magnetic modulation gear and the second magnetic modulation gear are different from each other in terms of any two of the number of pole pairs of the inner magnetic pole body, the number of magnetic poles of the intermediate magnetic pole body, and the number of pole pairs of the outer magnetic pole body; and at least one of the inner magnetic pole body, the intermediate magnetic pole body, and the outer magnetic pole body includes a component common to the first magnetic modulation gear and the second magnetic modulation gear.

According to the present invention, magnetic modulation gears having different reduction ratios can be suitably lined up.

BRIEF DESCRIPTION OF THE DRAWINGS

Fig. 1 is a sectional view of a magnetic modulation gear according to an embodiment.
Fig. 2 is a cross-sectional view taken along line III-III of Fig. 1.
Figs. 3A, 3B, 3C, and 3D are diagrams showing variation examples of an inner magnetic pole body according to the embodiment.
Fig. 4 is a diagram showing examples of the number of pole pairs and a damping ratio in a case where the number of magnetic pole pieces is set to be constant.
Fig. 5 is a diagram showing examples of the number of pole pairs and a damping ratio in a case where the number of outer pole pairs is set to be constant.

DETAILED DESCRIPTION OF THE INVENTION

An embodiment of the present invention will be described in detail below with reference to the drawings.
A series of magnetic modulation gears according to the present embodiment is a product group of magnetic modulation gears 1 that includes a first magnetic modulation gear 1A and a second magnetic modulation gear 1B. Both the first magnetic modulation gear 1A and the second magnetic modulation gear 1B are magnetic modulation gears which have the same basic structure and of which reduction ratios are different from each other.

[Entire configuration of magnetic modulation gear]

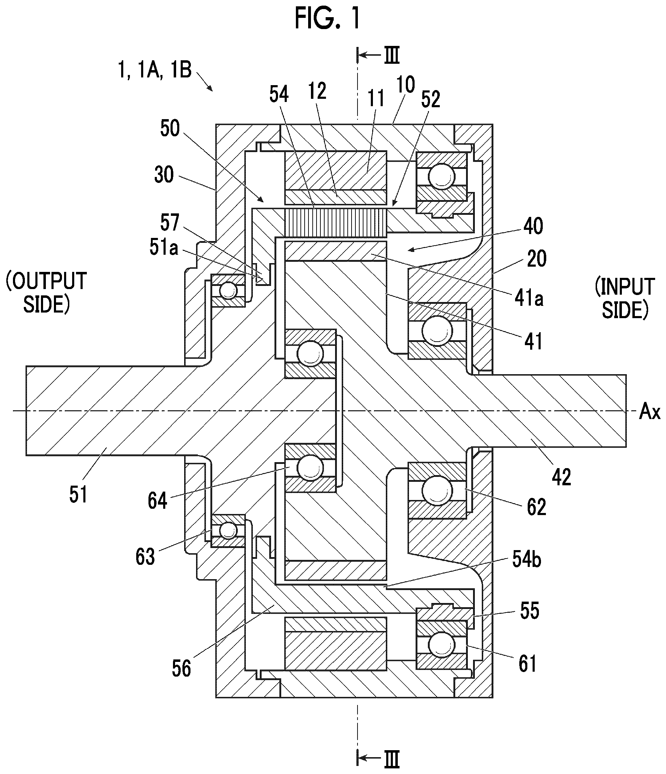

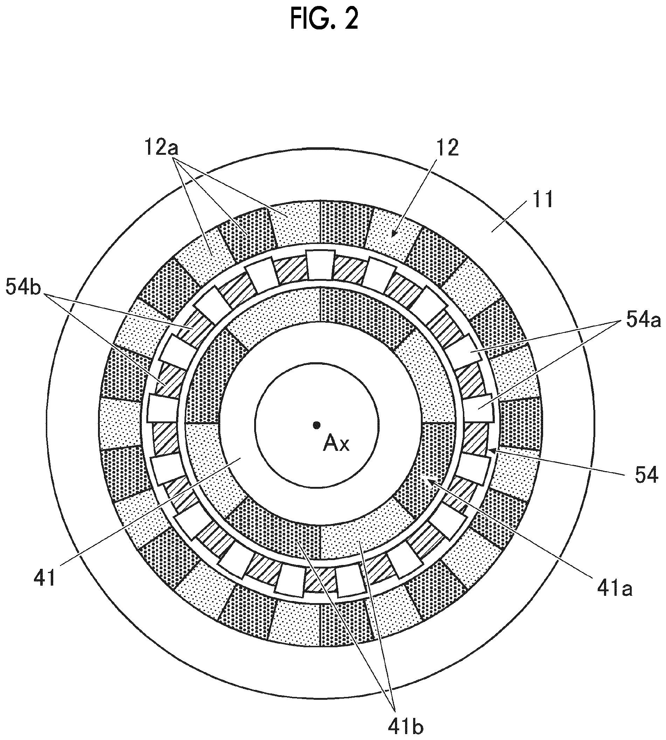

Fig. 1 is a sectional view of the magnetic modulation gear 1 according to the present embodiment, and Fig. 2 is a cross-sectional view taken along line III-III of Fig. 1.
In the following description, a direction along a center axis Ax of the magnetic modulation gear 1 is referred to as an "axial direction", a direction perpendicular to the center axis Ax is referred to as a "radial direction", and a rotation direction around the center axis Ax is referred to as a "circumferential direction". Further, in the axial direction, a side connected to an external driven member (a left side in the drawing) is referred to as an "output side", and a side opposite thereto (a right side in the drawing) is referred to as an "input side". Furthermore, an inner magnet 41c to be described later is not shown in Fig. 2.
As shown in Figs. 1 and 2, the magnetic modulation gear 1 according to the present embodiment includes a casing (frame) 10, an input-side cover 20 and an output-side cover 30 that cover both sides of the casing 10 in the axial direction, and an input shaft 40 and a magnetic modulator 50 of which main portions are accommodated in the input-side cover 20 and the output-side cover 30.
The casing 10 is formed in a substantially cylindrical shape around the center axis Ax, and includes a stator yoke 11 and an outer magnetic pole body 12 on an inner peripheral portion thereof.

The stator yoke 11 is formed in a cylindrical shape, and is fitted to the inside of the casing 10.

The outer magnetic pole body 12 is formed of a plurality of outer magnets 12a. The plurality of outer magnets 12a are, for example, permanent magnets such as neodymium magnets, have the number of pole pairs more than that of inner magnetic poles 41b of an input shaft 40 to be described later, and are attached to an inner peripheral surface of the stator yoke 11 such that the outer magnets 12a having different polarities are alternately arranged in the circumferential direction. However, the outer magnetic pole body 12 may have the shape of an integrated ring, or may have a shape in which divided outer magnets 12a are arranged in the circumferential direction.

Further, a bearing 61 (for example, a ball bearing) by which the magnetic modulator 50 is rotatably supported is disposed on the inner peripheral portion of the casing 10 closer to the input side than the stator yoke 11.

The input-side cover 20 is disposed on the input side of the casing 10, and covers an inner opening of the casing 10 from the input side. An outer peripheral portion of the input-side cover 20 is fitted to the casing 10 by a spigot joint. Further, a bearing 62 (for example, a ball bearing) by which the input shaft 40 is rotatably supported is disposed on an inner peripheral portion of the input-side cover 20.

The output-side cover 30 is disposed on the output side of the casing 10, and covers the inner opening of the casing 10 from the output side. An outer peripheral portion of the output-side cover 30 is fitted to the casing 10 by a spigot joint. Furthermore, a bearing 63 (for example, a ball bearing) by which the magnetic modulator 50 is rotatably supported is disposed on an inner peripheral portion of the output-side cover 30.

The input shaft 40 is a shaft that is rotated about the center axis Ax, and includes a disk portion 41 and a motor connection portion 42. The input shaft 40 is rotatably supported by the bearing 62 that is disposed between the input-side cover 20 and the input shaft 40 and a bearing 64 that is disposed between the magnetic modulator 50 and the input shaft 40.

The motor connection portion 42 extends from the disk portion 41 to the input side in the axial direction. A tip end side of the motor connection portion 42 protrudes outward from the input-side cover 20, and this protruding portion is connected to a motor (not shown).

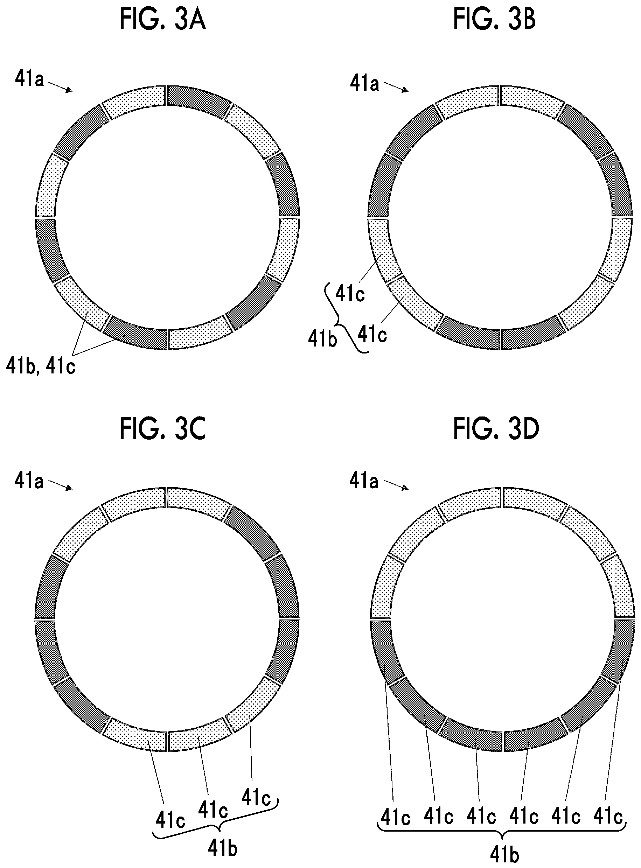

The disk portion 41 includes an inner magnetic pole body 41a, which is disposed on a radially inner side of the outer magnetic pole body 12, on an outer peripheral portion thereof. The inner magnetic pole body 41a is formed of a plurality of inner magnetic poles 41b. The plurality of inner magnetic poles 41b are attached to an outer peripheral surface of the disk portion 41 such that the inner magnetic poles 41b having different polarities are alternately arranged in the circumferential direction. However, the inner magnetic pole body 41a may have the shape of an integrated ring, or may have a shape in which divided inner magnetic poles 41b are arranged in the circumferential direction. As described later, the inner magnetic pole 41b is formed of at least one inner magnet 41c (see Figs. 3A, 3B, 3C, and 3D).

The magnetic modulator 50 includes an output shaft part 51 and a cylindrical part 52.

The output shaft part 51 is a metal shaft that is rotated about the center axis Ax. Approximately output-side half of the output shaft part 51 protrudes outward from the output-side cover 30, and this protruding portion is connected to a driven member (not shown).

A substantially middle portion of the output shaft part 51 in the axial direction is rotatably supported by the bearing 63 that is disposed between the output-side cover 30 and the output shaft part 51. Further, the bearing 64 (for example, a ball bearing) by which the input shaft 40 is rotatably supported is disposed at an input-side end portion of the output shaft part 51. An output-side end portion of the cylindrical part 52 is connected to an outer peripheral portion of the output shaft part 51 that is positioned between the bearings 63 and 64 in the axial direction.

The cylindrical part 52 is formed in a substantially cylindrical shape around the center axis Ax, and includes an intermediate magnetic pole body 54 that is disposed at a position corresponding to the outer magnetic pole body 12 and the inner magnetic pole body 41a in the axial direction. The intermediate magnetic pole body 54 includes a plurality of magnetic pole pieces 54a.

The plurality of magnetic pole pieces 54a are arranged at a predetermined interval in the circumferential direction and are formed in a ring shape as a whole. The plurality of magnetic pole pieces 54a (intermediate magnetic pole body 54) are arranged concentrically with a predetermined gap between the magnetic pole pieces 54a and the outer magnetic pole body 12 and the inner magnetic pole body 41a on the radially inner side of the outer magnetic pole body 12 and a radially outer side of the inner magnetic pole body 41a. Each of the magnetic pole pieces 54a has a configuration in which thin electromagnetic steel sheets (laminated steel sheets) are laminated in the axial direction.

The magnetic pole pieces 54a adjacent to each other in the circumferential direction are connected to each other by a connecting portion 54b provided therebetween.

The connecting portion 54b is made of a resin, and forms a part of a resin portion 56 to be described later.

An outer peripheral surface of the connecting portion 54b is recessed toward the radially inner side from an outer peripheral surface of the magnetic pole piece 54a.

However, the inner peripheral surface and the outer peripheral surface of the connecting portion 54b may be flush with the inner peripheral surface and the outer peripheral surface of the magnetic pole piece 54a, or the inner peripheral surface of the connecting portion 54b may be recessed toward the radially outer side.

In addition, the connecting portion 54b and the magnetic pole piece 54a may be integrally formed of electromagnetic steel sheets. In this case, the position and the width of the connecting portion 54b in the radial direction are not particularly limited, but may be adapted as described in, for example, International Publication No. 2023/026804.

A bearing support ring 55 made of metal (for example, stainless steel) is disposed in an input-side end portion of the cylindrical part 52. The bearing support ring 55 is fixed to an outer peripheral portion of the cylindrical part 52, and an inner ring of the bearing 61 disposed between the bearing support ring 55 and the casing 10 is fitted to an outer peripheral surface of the bearing support ring 55.

A portion of the cylindrical part 52 excluding the magnetic pole pieces 54a and the bearing support ring 55 is a resin portion 56 made of a resin (for example, super engineering plastic). Spaces between the plurality of magnetic pole pieces 54a are also filled with the resin, and this resin filled in the spaces forms the above-mentioned connecting portions 54b.

An output-side end portion of the resin portion 56 protrudes toward the radially inner side and is connected to the output shaft part 51. A plurality of protrusions 57 protruding toward the radially inner side are arranged in the circumferential direction on an inner peripheral portion of the output-side end portion of the resin portion 56. The plurality of protrusions 57 are formed to correspond to a plurality of recessed portions 51a of an outer peripheral surface of the output shaft part 51, and the output shaft part 51 and the cylindrical part 52 (resin portion 56) are firmly fixed to each other by engagement between the protrusions 57 and the recessed portions 51a, so that the relative movement of the output shaft part 51 and the cylindrical part 52 in the radial direction and the axial direction is suppressed.

[Configuration of inner magnetic pole body]

As shown in Figs. 3A and 3B, in the inner magnetic pole body 41a, each of the inner magnetic poles 41b is formed of at least one inner magnet 41c. The respective inner magnets 41c are, for example, permanent magnets such as neodymium magnets, include magnets having different polarities, and have substantially the same shape and size. Specifically, each of the inner magnetic poles 41b is formed of at least one of the inner magnets 41c that are adjacent to each other in the circumferential direction and have the same polarity. Each of the inner magnets 41c is formed to have a size in which the inner magnetic pole body 41a is equally divided in the circumferential direction regardless of the polarity.

It is possible to change the number of pole pairs (the number Ni of inner pole pairs) of the inner magnetic pole 41b by changing the arrangement of the inner magnets 41c in the inner magnetic pole body 41a having such a configuration. In examples shown in Figs. 3A, 3B, 3C, and 3D, each of the inner magnets 41c has a size in which the inner magnetic pole body 41a is equally divided into 12 equal pieces in the circumferential direction and the number Ni of inner pole pairs is 6 in Fig. 3A, 3 in Fig. 3B, 2 in Fig. 3C, and 1 in Fig. 3D.

[Relationship between number of magnetic poles (number of pole pairs) and reduction ratio]

In the magnetic modulation gear 1, the intermediate magnetic pole body 54 (magnetic pole pieces 54a) modulates a spatial magnetic flux waveform, which is formed by the inner magnetic pole body 41a (inner magnetic poles 41b) in a case where the input shaft 40 is rotated about the center axis Ax, to the same frequency as the outer magnetic pole body 12 (outer magnets 12a). Then, rotation torque is transmitted to the magnetic modulator 50 using a magnetic force between the intermediate magnetic pole body 54 and the outer magnetic pole body 12. In this way, a rotating motion input to the input shaft 40 is decelerated and is output to the driven member (not shown) connected to the output shaft part 51 of the magnetic modulator 50.

The intermediate magnetic pole body 54 is fixed and the outer magnetic pole body 12 is provided on a rotatable low-speed rotor, so that an output may be taken out of the low-speed rotor.

Here, a reduction ratio R of the magnetic modulation gear 1 is represented by Equation (1) in a case where an output shaft is the intermediate magnetic pole body 54, and is represented by Equation (2) in a case where an output shaft is the outer magnetic pole body 12.

$$R = Np/Ni \quad \dots \quad (1)$$

$$R = No/Ni \quad \dots \quad (2)$$

Here, Np denotes the number of magnetic poles (the number of magnetic pole pieces 54a: the number of magnetic pole pieces) of the intermediate magnetic pole body 54, No denotes the number of pole pairs of the outer magnets 12a (the number of outer pole pairs), and Ni is the number of pole pairs of the inner magnetic pole body 41a (the number of inner pole pairs).

Further, a relationship of Equation (3) is established between the number Np of magnetic pole pieces, the number No of outer pole pairs, and the number Ni of inner pole pairs.

$$Np = Ni + No \quad \dots \quad (3)$$

[Series system of magnetic modulation gears]

Subsequently, a series system of the magnetic modulation gears 1 according to the present embodiment will be described.

The series of the magnetic modulation gears 1 according to the present embodiment is systematically organized in accordance with features (a frame number or a reduction ratio R) of a speed reducer.

Here, the "frame number" of the speed reducer means "a size classification in a case where attention is paid to any one of concepts of various types of transmission torque of the speed reducer, such as the output torque, the peak torque, or the rated torque, at the same reduction ratio R". That is, in a case where the reduction ratio R is the same, speed reducers having different frame numbers have the same tendency of a size relationship regardless of the type of the specific transmission torque to which attention is paid. This tendency also coincides with a size relationship of the sizes (dimensions) of the speed reducers (there is no reversal of the size relationship).

Further, in the present embodiment, the "series of magnetic modulation gears" is understood as a "group of magnetic modulation gears that are lined up as the same series, and that have a common configuration other than a power transmission unit (the inner magnetic pole body 41a, the intermediate magnetic pole body 54, and the outer magnetic pole body 12) using magnetic modulation except for points to be described later and have reduction ratios R different from each other". Here, "common configuration (the same shape and dimensions)" means that the basic shape and dimensions are designed to be the same, and there is a minute difference caused by a manufacturing error or the like.

Here, in a case where a plurality of reduction ratios R are lined up for each of magnetic modulation gears having the same frame number (size), it is possible to realize different reduction ratios R by changing any two of the number Ni of inner pole pairs, the number No of outer pole pairs, and the number Np of magnetic pole pieces from Equations (1) to (3) described above.

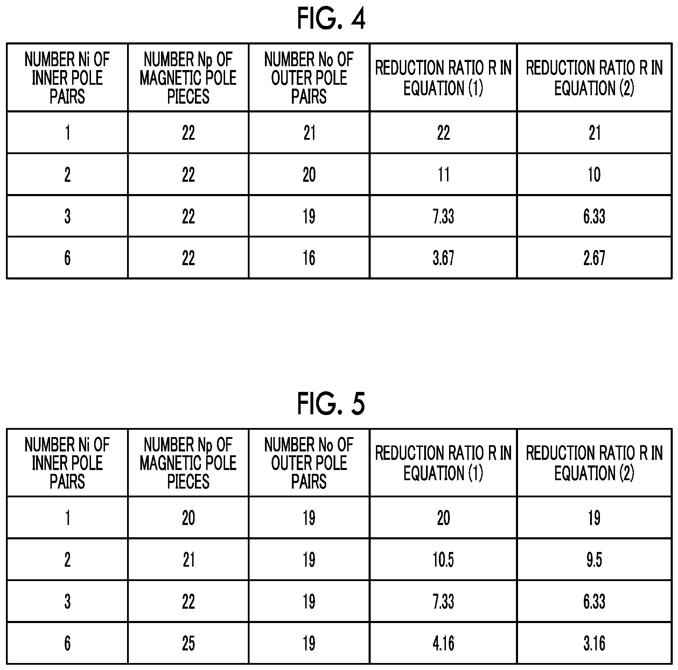

For example, in a case where the number Np of magnetic pole pieces is set to be constant, the number Ni of inner pole pairs, the number No of outer pole pairs, and the reduction ratio R are as shown in, for example, Fig. 4. Further, in a case where the number No of outer pole pairs is set to be constant, the number Ni of inner pole pairs, the number Np of magnetic pole pieces, and the reduction ratio R are as shown in, for example, Fig. 5.

Furthermore, in the magnetic modulation gear 1 according to the present embodiment, it is possible to change the number Ni of inner pole pairs by adjusting the arrangement of the inner magnets 41c in the inner magnetic pole body 41a as described above. For this reason, in the lineup of the series of the magnetic modulation gears 1 according to the present embodiment (for example, the first magnetic modulation gear 1A and the second magnetic modulation gear 1B), the inner magnetic pole bodies 41a can be formed of a plurality of common inner magnets 41c and can be adapted to have the numbers of pole pairs (the numbers Ni of inner pole pairs) different from each other. That is, in the series of the magnetic modulation gears 1 according to the present embodiment, the different numbers Ni of inner pole pairs can be realized while the inner magnets 41c having the common configuration are used.

Accordingly, in the series of the magnetic modulation gears 1 according to the present embodiment, in a case where the number Np of magnetic pole pieces is set to be constant, so that different magnets (outer magnets 12a) for only the outer magnetic pole body 12 may be prepared so that the different numbers No of outer pole pairs can be realized (see Fig. 4). Magnets having a common configuration may be used as the outer magnets 12a, and an interval between the magnets may be merely changed. That is, in a case where a small number of pole pairs is to be realized, an interval between the adjacent outer magnets 12a may be increased.

In addition, in a case where the number No of outer pole pairs is set to be constant, that is, in a case where the number Np of magnetic pole pieces is to be changed, the magnetic pole pieces 54a having the same shape may be used and the number and the interval of the magnetic pole pieces 54a may be changed (see Fig. 5).

Here, the inner magnetic pole body 41a is formed of the inner magnets 41c having a shape and a size common to the same series. However, at least one of the inner magnetic pole body 41a, the intermediate magnetic pole body 54, and the outer magnetic pole body 12 may include a component common to the two magnetic modulation gears 1 of the same series. For example, the number of pole pairs of the outer magnets 12a may be adapted to be variable as in the inner magnets 41c of the present embodiment.

[Technical effects of present embodiment]

As described above, according to the present embodiment, the two magnetic modulation gears 1 of the same series are different from each other in terms of any two of the number of pole pairs of the inner magnetic pole body 41a (the number Ni of inner pole pairs), the number of magnetic poles of the intermediate magnetic pole body 54 (the number Np of magnetic pole pieces), and the number of pole pairs of the outer magnetic pole body 12 (the number No of outer pole pairs). Further, at least one of the inner magnetic pole body 41a, the intermediate magnetic pole body 54, and the outer magnetic pole body 12 includes a component common to the two magnetic modulation gears 1 of the same series.

Accordingly, the magnetic modulation gears 1 having different reduction ratios R can be suitably lined up in the series of the same size (frame number).

Furthermore, according to the present embodiment, the inner magnetic pole bodies 41a of the two magnetic modulation gears 1 of the same series are formed of the inner magnets 41c having a common shape and size and the numbers of pole pairs thereof (the numbers Ni of inner pole pairs) are different from each other.

Accordingly, the magnetic modulation gears 1 having different reduction ratios R can be suitably lined up while cost is reduced.

That is, in a case where two of the number Ni of inner pole pairs, the number Np of magnetic pole pieces, and the number No of outer pole pairs are simply made different from each other in the series having the same frame number, the number of drawings is increased. For this reason, it is difficult to obtain economies of scale for components (component unit price, management cost, and the like).

In this regard, according to the present embodiment, it is possible to change the number Ni of inner pole pairs while using the common inner magnets 41c. For this reason, it is possible to change the reduction ratio R only by adjusting the configuration of any one of the intermediate magnetic pole body 54 and the outer magnetic pole body 12. Therefore, the number of components in the entire series can be reduced, and the cost can be reduced.

In addition, according to the present embodiment, in a case where the numbers Np of magnetic pole pieces are different from each other and the numbers No of outer pole pairs are equal to each other in the two magnetic modulation gears 1 of the same series, it is preferable that the intermediate magnetic pole bodies 54 are formed of the magnetic pole pieces 54a having a common shape and size.

Accordingly, the magnetic pole piece 54a can be shared by the two magnetic modulation gears 1 of the same series, so that cost can be reduced.

Further, according to the present embodiment, in a case where the numbers Np of magnetic pole pieces are equal to each other and the numbers No of outer pole pairs are different from each other in the two magnetic modulation gears 1 of the same series, it is preferable that the outer magnetic pole bodies 12 are formed of the outer magnets 12a having a common shape and size and intervals between the two adjacent outer magnets 12a are different from each other.

Accordingly, the outer magnets 12a can be shared by the two magnetic modulation gears 1 of the same series, so that cost can be reduced.

Furthermore, according to the present embodiment, in each of the magnetic modulation gears 1, the plurality of inner magnets 41c of the inner magnetic pole body 41a are formed to have the same size and shape and at least one of the inner magnets 41c adjacent to each other in the circumferential direction and having the same polarity forms each of the plurality of inner magnetic poles 41b.

Accordingly, it is possible to change the number Ni of inner pole pairs by adjusting the arrangement of the inner magnets 41c. In addition, since the inner magnets 41c are divided, eddy current can be suppressed.

[Others]

Although the embodiment of the present invention has been described above, the present invention is not limited to the above-described embodiment. The details shown in the embodiment described above can be changed as appropriate without departing from the scope of the invention.

Brief Description of the Reference Symbols

1, 1A, 1B: Magnetic modulation gear
12: Outer magnetic pole body
12a: Outer magnet
41a: Inner magnetic pole body
41b: Inner magnetic pole
41c: Inner magnet
54: Intermediate magnetic pole body
54a: Magnetic pole piece
Ni: Number of inner pole pairs
No: Number of outer pole pairs
Np: Number of magnetic pole pieces
R: Reduction ratio

**Claims**

1. A series of magnetic modulation gears (1) comprising:

   a first magnetic modulation gear (1A); and
   a second magnetic modulation gear (1B),
   wherein each of the first magnetic modulation gear (1A) and the second magnetic modulation gear (1B) includes an inner magnetic pole body (41a), an intermediate magnetic pole body (54), and an outer magnetic pole body (12),
   the first magnetic modulation gear (1A) and the second magnetic modulation gear (1B) are different from each other in terms of any two of the number of pole pairs of the inner magnetic pole body (41a), the number of magnetic poles of the intermediate magnetic pole body (54), and the number of pole pairs of the outer magnetic pole body (12), and
   at least one of the inner magnetic pole body (41a), the intermediate magnetic pole body (54), and the outer magnetic pole body (12) includes a component common to the first magnetic modulation gear (1A) and the second magnetic modulation gear (1B).

2. The series of magnetic modulation gears (1) according to claim 1,
   wherein the inner magnetic pole bodies (41a) of the first magnetic modulation gear (1A) and the second magnetic modulation gear (1B) are formed of inner magnets (41c) having a common shape and size, and the numbers of pole pairs of the inner magnetic pole bodies (41a) are different from each other.

3.  The series of magnetic modulation gears (1) according to claim 2,

    wherein the numbers of magnetic poles of the intermediate magnetic pole bodies (54) of the first magnetic modulation gear (1A) and the second magnetic modulation gear (1B) are different from each other, and
    the numbers of pole pairs of the outer magnetic pole bodies (12) of the first magnetic modulation gear (1A) and the second magnetic modulation gear (1B) are equal to each other.

4.  The series of magnetic modulation gears (1) according to claim 3,
    wherein the intermediate magnetic pole bodies (54) of the first magnetic modulation gear (1A) and the second magnetic modulation gear (1B) are formed of magnetic pole pieces (54a) having a common shape and size.

5.  The series of magnetic modulation gears (1) according to claim 2,

    wherein the numbers of magnetic poles of the intermediate magnetic pole bodies (54) of the first magnetic modulation gear (1A) and the second magnetic modulation gear (1B) are equal to each other, and
    the numbers of pole pairs of the outer magnetic pole bodies (12) of the first magnetic modulation gear (1A) and the second magnetic modulation gear (1B) are different from each other.

6.  The series of magnetic modulation gears (1) according to claim 5,
    wherein the outer magnetic pole bodies (12) of the first magnetic modulation gear (1A) and the second magnetic modulation gear (1B) are formed of outer magnets (12a) having a common shape and size, and intervals between two adjacent outer magnets (12a) of the first magnetic modulation gear (1A) and the second magnetic modulation gear (1B) are different from each other.

7.  A magnetic modulation gear (1) comprising:

    an inner magnetic pole body (41a) that includes a plurality of inner magnets (41c) arranged in a circumferential direction;
    an intermediate magnetic pole body (54) that is disposed on a radially outer side of the inner magnetic pole body (41a); and

an outer magnetic pole body (12) that is disposed on a radially outer side of the intermediate magnetic pole body (54),
wherein the plurality of inner magnets (41c) of the inner magnetic pole body (41a) are formed to have the same size and shape, and
at least one of the inner magnets (41c) that are adjacent to each other in the circumferential direction and have the same polarity forms each of a plurality of inner magnetic poles (41b) .

# FIG. 1

# FIG. 2

# FIG. 3A

41a →

41b, 41c

# FIG. 3B

41a →

41c

41b 41c

# FIG. 3C

41a →

41c 41c 41c

41b

# FIG. 3D

41a →

41c 41c 41c 41c 41c 41c

41b

# FIG. 4

| NUMBER Ni OF INNER POLE PAIRS | NUMBER Np OF MAGNETIC POLE PIECES | NUMBER No OF OUTER POLE PAIRS | REDUCTION RATIO R IN EQUATION (1) | REDUCTION RATIO R IN EQUATION (2) |
|---|---|---|---|---|
| 1 | 22 | 21 | 22 | 21 |
| 2 | 22 | 20 | 11 | 10 |
| 3 | 22 | 19 | 7.33 | 6.33 |
| 6 | 22 | 16 | 3.67 | 2.67 |

# FIG. 5

| NUMBER Ni OF INNER POLE PAIRS | NUMBER Np OF MAGNETIC POLE PIECES | NUMBER No OF OUTER POLE PAIRS | REDUCTION RATIO R IN EQUATION (1) | REDUCTION RATIO R IN EQUATION (2) |
|---|---|---|---|---|
| 1 | 20 | 19 | 20 | 19 |
| 2 | 21 | 19 | 10.5 | 9.5 |
| 3 | 22 | 19 | 7.33 | 6.33 |
| 6 | 25 | 19 | 4.16 | 3.16 |

**EUROPEAN SEARCH REPORT**

Application Number

EP 25 18 6824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 217 372 A (JIANGSU JINLING YONGCI INDUSTRY RES INSTITUTE CO LTD) 12 January 2021 (2021-01-12) * abstract; figures 1-3 * | 1,7 | INV. H02K49/10 |
| X | CN 104 901 510 A (UNIV DALIAN JIAOTONG) 9 September 2015 (2015-09-09) * section "detailed ways"; figures 1,3,7 * | 7 | |
| A | CN 106 936 291 A (SHENZHEN ZHENGDE INTELLECTUAL CONTROL CO LTD) 7 July 2017 (2017-07-07) * section "detailed descirption"; figures 2-4 * | 2-6 | |

TECHNICAL FIELDS
SEARCHED        (IPC)

H02K

The present search report has been drawn up for all claims

| Place of search | Date of completion of the search | Examiner |
|---|---|---|
| Munich | 21 November 2025 | Sedlmeyer, Rafael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 18 6824

This annex lists the patent family members relating to the patent documents cited in  the above-mentioned European search report.
The members are as contained in the European Patent Office EDP file on
The European Patent Office is in no way liable for these particulars which are merely given for the purpose of information.

21-11-2025

| Patent document cited in search report | | Publication date | Patent family member(s) | Publication date |
|---|---|---|---|---|
| CN 112217372 | A | 12-01-2021 | NONE | |
| CN 104901510 | A | 09-09-2015 | NONE | |
| CN 106936291 | A | 07-07-2017 | NONE | |

**REFERENCES CITED IN THE DESCRIPTION**

**Patent documents cited in the description**

- JP 2017017984 A

- WO 2023026804 A